# EUROPEAN PATENT SPECIFICATION

(11) **EP 3 822 502 B1**
(45) Date of publication and mention of the grant of the patent: **10.08.2022**
(21) Application number: 20203352.8
(22) Date of filing: 22.10.2020
(51) Int. Cl.: F16C 29/06, F16C 33/38

(54) **CHAIN BELT RETAINER AND LINEAR MOVING APPARATUS**
KETTENBANDHALTER UND LINEARBEWEGUNGSVORRICHTUNG
DISPOSITIF DE RETENUE DE COURROIE DE CHAÎNE ET APPAREIL MOBILE LINÉAIRE

(30) Priority: 14.11.2019 TW 108215110 U
(43) Date of publication of application: 19.05.2021
(73) Proprietor: Lee, Szu-Ying, New Taipei City 220 (TW)
(72) Inventor: Lee, Szu-Ying, New Taipei City 220 (TW)
(74) Representative: Viering, Jentschura & Partner mbB Patent- und Rechtsanwälte

(56) References cited:
- EP-A2- 1 342 928
- DE-A1-102016 212 707
- DE-U1-202007 010 339
- JP-A- 2002 349 563
- US-A1- 2007 110 345

## Description

### BACKGROUND

### Technical Field

The instant disclosure relates to a retainer and a mechanical apparatus having the retainer, and in particular, to a chain belt retainer and a linear moving apparatus using the chain belt retainer.

### Related Art

For a linear moving apparatus using ball contact transmission (for example, a linear sliding rail, a ball screw, or a ball spline), a ball retainer is often used to accommodate a plurality of balls to avoid frictions and collisions between the balls, so that during operation, the linear moving apparatus moves more smoothly and generates less noise.

Generally, the ball retainer has a plurality of spacers arranged at intervals, and the plurality of spacers are connected to each other through connecting straps. The plurality of balls are accommodated between the plurality of spacers. However, when the ball retainer is bent (for example, the ball retainer is bent along a ball circulation channel of the linear moving apparatus), the plurality of spacers located at a bent portion are stressed and intervals between outer sides of the plurality of spacers are increased, resulting in a decrease in the ball retention and the possibility of loosening of the balls. Some known designs are disclosed in DE207007010339U1 and in DE102016212707A1. Document EP1342928A2 discloses the preamble of claim 1.

### SUMMARY

According to the present invention, a chain belt retainer as defined by claim 1 is provided. A linear moving apparatus according to the present invention is defined in claim 5. The dependent claims show some examples of such a chain belt retainer and linear moving apparatus, respectively. In the view of the above, a chain belt retainer is provided in an embodiment, which is configured to retain a plurality of rolling elements. The chain belt retainer includes two flexible chain belts and a plurality of spacers. The two flexible chain belts are parallel to each other and extend in the same extending direction, and the two flexible chain belts define a central surface. The plurality of spacers are arranged at equal intervals and along the extending direction, the spacers are separately connected between the two flexible chain belts, the spacers are divided into first separators and second separators by the central surface, the plurality of first separators are located on the same side of the central surface, each first separator includes a far end away from the central surface, the far end is provided with a long slot, and the long slot is perpendicular to the extending direction, wherein a sectioned surface of the long slot is V-shaped, the long slot has a slot bottom edge and a first slope and a second slope connected to two opposite sides of the slot bottom edge, and the first slope and the second slope are convex curved surfaces; wherein the long slot divides the first separator into a first elastic retaining slice and a second elastic retaining slice, the first elastic retaining slice has a first root, the first root is adjacent to the central portion relative to the first end, and a thickness of the first end is less than a thickness of the first root, the second elastic retaining slice has a second root, the second root is adjacent to the central portion relative to the second end, and a thickness of the second end is less than a thickness of the second root.

A linear moving apparatus is provided in this embodiment, including a guide member, a moving member, the foregoing chain belt retainer, and a plurality of rolling elements. The moving member is disposed on the guide member, a circulation channel is disposed between the guide member and the moving member, the circulation channel includes a curved groove, and the curved groove has an external curved groove wall and an internal curved groove wall. The chain belt retainer is accommodated in the circulation channel, and a long slot of a first separator of each spacer located in the curved groove is adjacent to and faces the external curved groove wall. The plurality of rolling elements are accommodated between the plurality of spacers of the chain belt retainer.

Based on the above, according to the chain belt retainer of the embodiments of the instant disclosure, long slots are provided on far ends of first separators on the same side of spacers, so that when the chain belt retainer is bent, for example, after the chain belt retainer is accommodated in a circulation channel having a curved groove of a linear moving apparatus (for example, a linear sliding rail apparatus, a ball screw apparatus, or a ball spline apparatus), the far ends of the spacers located in the curved groove can be stressed to open towards the rolling elements, thereby significantly increasing the retention to prevent the rolling elements located in the curved groove from departing from the chain belt retainer.

### BRIEF DESCRIPTION OF THE DRAWINGS

FIG. 1 illustrates a three-dimensional view of an embodiment of a chain belt retainer according to the instant disclosure.
FIG. 2 illustrates a partial enlarged three-dimensional view of an embodiment of a chain belt retainer according to the instant disclosure.
FIG. 3 illustrates a side view of an embodiment of a chain belt retainer according to the instant disclosure.
FIG. 4 illustrates a partial cross-sectional view of an example of a chain belt retainer that is not part of the invention.
FIG. 5 illustrates a partial cross-sectional view of another example of a chain belt retainer that is not part of the invention.
FIG. 6 illustrates a partial cross-sectional view of another embodiment of a chain belt retainer according to the instant disclosure.
FIG. 7 illustrates a partial cross-sectional view of another example of a chain belt retainer that is not part of the invention.
FIG. 8 illustrates a three-dimensional view of an embodiment of a linear moving apparatus according to the instant disclosure.
FIG. 9 illustrates a partial cross-sectional view of a linear moving apparatus applied to a chain belt retainer according to the instant disclosure.
FIG. 10 illustrates a schematic planar view of a chain belt retainer accommodated in a circulation channel that is not part of the invention.
FIG. 11 illustrates a partial enlarged view of FIG. 10.

### DETAILED DESCRIPTION

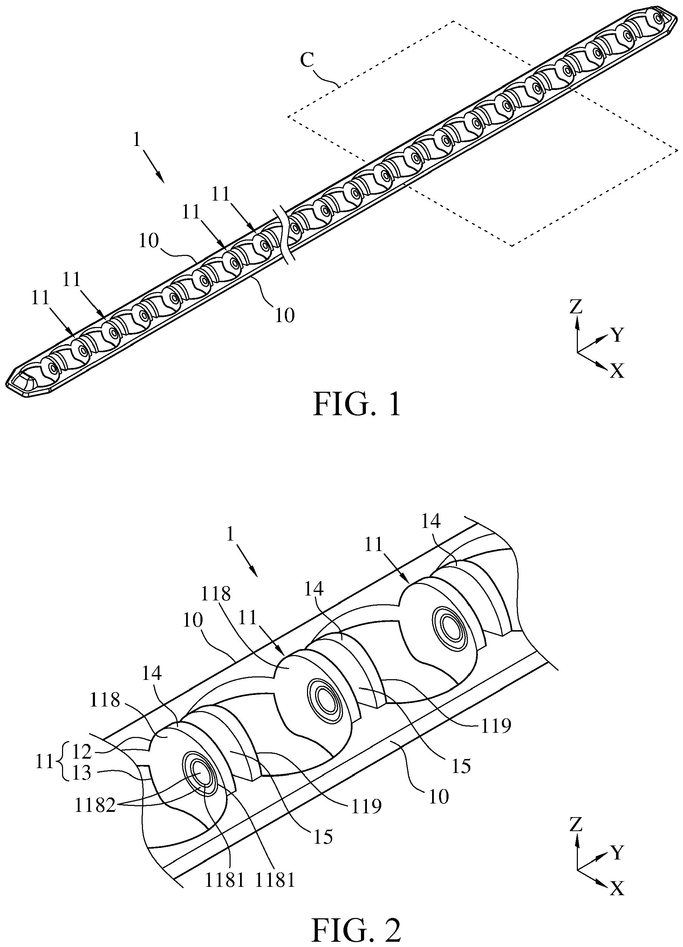

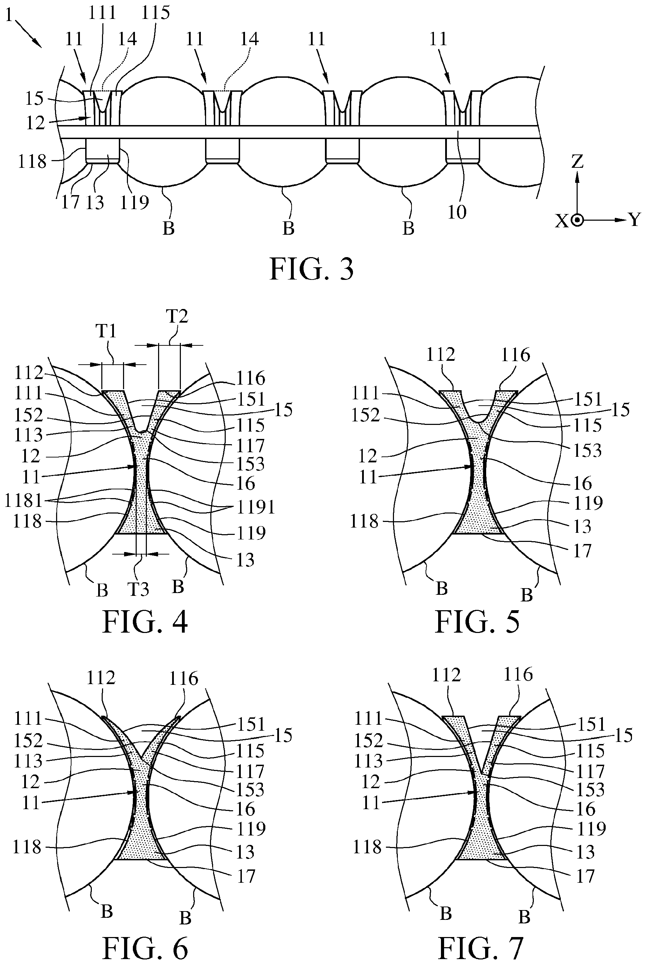

FIG. 1 is a three-dimensional view of an embodiment of a chain belt retainer according to the instant disclosure, FIG. 2 is a partial enlarged three-dimensional view of an embodiment of a chain belt retainer according to the instant disclosure, FIG. 3 is a side view of an embodiment of a chain belt retainer according to the instant disclosure, and FIG. 4 is a partial cross-sectional view of an embodiment of a chain belt retainer according to the instant disclosure. As shown in FIG. 1 to FIG. 3, a chain belt retainer 1 provided in this embodiment includes two flexible chain belts 10 and a plurality of spacers 11, the two flexible chain belts 10 are parallel to each other and extend in the same extending direction (for example, in this example, the flexible chain belts 10 extend along a Y-axis direction), the plurality of spacers 11 are arranged at equal intervals along the extending direction of the flexible chain belts 10, and the plurality of spacers 11 are separately connected between the two flexible chain belts 10.

In some embodiments, the plurality of spacers 11 and the two flexible chain belts 10 may be an integrally formed structure, to prevent the spacers 11 and the flexible chain belts 10 from being stressed to depart from each other in a use process. For example, the plurality of spacers 11 and the two flexible chain belts 10 may be integrally formed in a manner of injection molding, but this is not limited herein.

In some embodiments, the chain belt retainer 1 may be configured to retain a plurality of rolling elements B. As shown in FIG. 1 to FIG. 4, the chain belt retainer 1 is configured to accommodate the plurality of rolling elements B, where the rolling elements B may be balls or rollers. In this embodiment, two opposite sides of each spacer 11 are respectively provided with a first retaining surface 118 and a second retaining surface 119 in a concave manner, and the first retaining surface 118 and the second retaining surface 119 face the extending direction of the flexible chain belts 10 (as shown in FIG. 2 and FIG. 3, the first retaining surface 118 and the second retaining surface 119 face the Y-axis direction). The plurality of rolling elements B are accommodated between the plurality of spacers 11 of the chain belt retainer 1. Specifically, an accommodation space is formed between the first retaining surface 118 and the second retaining surface 119 that are adjacent to each other of two adjacent spacers 11, and the rolling element B is correspondingly accommodated in the accommodation space to be held in position by the first retaining surface 118 and the second retaining surface 119. In addition, in this embodiment, the first retaining surfaces 118 and the second retaining surfaces 119 are spherical corresponding to a shape of the rolling elements B, so that the rolling elements B can be held in the accommodation space move stably, but this is not limited herein. The first retaining surfaces 118 and the second retaining surfaces 119 may alternatively be other shapes (for example, an arc shape).

In some embodiments, the chain belt retainer 1 may be applied to various types of linear moving apparatuses using the rolling elements B for circulation transmission, for example, a ball screw, a ball spline, or a linear sliding rail, to avoid frictions and collisions between the rolling elements B, so that the linear moving apparatus moves more smoothly and generates less noise during operation. In addition, because the plurality of spacers 11 are separately connected between the two flexible chain belts 10, the chain belt retainer 1 can be bent freely to be accommodated in various circulation channels of different shapes.

As shown in FIG. 1 to FIG. 3, in this embodiment, the two flexible chain belts 10 extend along the same extending direction and define a central surface C (as shown in FIG. 1, the central surface C is an XY plane). The spacers 11 are divided into first separators 12 and second separators 13 by the central surface C. Specifically, each spacer 11 is divided into two block plates (the first separator 12 and the second separator 13) by the central surface C. The plurality of first separators 12 of the plurality of spacers 11 are located on the same side of the central surface C, the plurality of second separators 13 of the plurality of spacers 11 are located on the other side of the central surface C, where sizes of the first separators 12 and the second separators 13 of the spacers 11 may be the same or different. For example, in this embodiment, the spacers 11 are annular, and the first separators 12 and the second separators 13 that are divided by the central surface C and that constitute the spacers 11 are semi-annular. However, the spacers 11 may alternatively be other shapes, and this is not limited in this embodiment.

As shown in FIG. 1 to FIG. 3, in this embodiment, the first separator 12 of each spacer 11 includes a far end 14 away from the central surface C, the far end 14 is provided with a long slot 15, and the long slot 15 is perpendicular to the extending direction of the flexible chain belts 10. For example, in this embodiment, the flexible chain belts 10 extend along the Y-axis direction, the long slots 15 are concavely provided in the far ends 14 of the first separators 12 along a Z-axis direction and run through the first separators 12 along an X-axis direction. In this way, the formed long slots 15 divide the first separators 12 into first elastic retaining slices 111 and second elastic retaining slices 115, where the long slots 15, the first elastic retaining slices 111, and the second elastic retaining slices 115 may have a plurality of embodiments as follows. Detailed descriptions with reference to the accompanying drawings are provided as follows.

As shown in FIG. 3 and FIG. 4, in this embodiment, a sectioned surface of the long slot 15 of the first separator 12 is V-shaped and has a slot bottom edge 153 and a first slope 151 and a second slope 152 connected to two opposite sides of the slot bottom edge 153. The first elastic retaining slice 111 of the first separator 12 is located on a surface of an opposite side of the first slope 151, and forms a partial first retaining surface 118, the second elastic retaining slice 115 of the first separator 12 is located on a surface of an opposite side of the second slope 152, and forms a partial second retaining surface 119. Therefore, when elastic displacement happens to the first elastic retaining slice 111 and the second elastic retaining slice 115, the retention for the rolling elements B may be changed. For example, when the first elastic retaining slice 111 and the second elastic retaining slice 115 open elastically away from the long slot 15, the first elastic retaining slice 111 and the second elastic retaining slice 115 may separately approach the rolling elements B to increase the retention. In some embodiments, a depth of the long slot 15 is preferably greater than 1/3 of a diameter of the rolling element B, so that when the first elastic retaining slice 111 and the second elastic retaining slice 115 are stressed, the elastic replacement is easily generated to strengthen the retention for the rolling elements B. However, the foregoing size or shape of the long slot 15 is only an example and does not limit the instant disclosure.

In some embodiments, the first slope 151 and the second slope 152 of the sectioned surface of the long slot 15 of the first separator 12 may be planes or curved surfaces, and the first elastic retaining slice 111 and the second elastic retaining slice 115 may have changes of different thicknesses based on the shape of the sectioned surface of the long slot 15. As shown in FIG. 4, the first slope 151 and the second slope 152 of the long slot 15 of the first separator 12 provided in this embodiment are planes, and inclination angles of the first slope 151 and the second slope 152 are the same. In this way, the first elastic retaining slice 111 and the second elastic retaining slice 115 are symmetrically disposed based on the long slot 15.

Alternatively, FIG. 5 and FIG. 6 are partial cross-sectional views of other examples and embodiments of a chain belt retainer according to the instant disclosure. The first slope 151 and the second slope 152 of the long slot 15 of the first separator 12 provided in this embodiment are curved surfaces, and curvatures of the first slope 151 and the second slope 152 are the same. In this way, the first elastic retaining slice 111 and the second elastic retaining slice 115 can also be symmetrically disposed based on the long slot 15. In some examples and embodiments, the foregoing first slope 151 and the second slope 152 may be concave curved surfaces or convex curved surfaces, and a type of the curved surface may be an arc-shaped curved surface, a parabolic curved surface, or a curved surface of another shape. For example, in the embodiment of FIG. 5, the first slope 151 and the second slope 152 are the concave curved surfaces, or in the embodiment of FIG. 6, according to the invention, the first slope 151 and the second slope 152 are the convex curved surfaces. In this way, the first slope 151 and the second slope 152 can prevent the first elastic retaining slice 111 and the second elastic retaining slice 115 from being close to each other to prevent distances between far ends 14 of the plurality of spacers 11 from being excessively large, thereby improving the retention and avoiding the loosening of the rolling elements B.

However, some of the foregoing embodiments are only examples, the first slope 151 and the second slope 152 of the long slot 15 may alternatively be slopes of different shapes, which is determined according to an actual use requirement. For example, the first slope 151 of the long slot 15 is a plane, and the second slope 152 of the long slot 15 is a curved surface; or the first slope 151 of the long slot 15 is a curved surface, and the second slope 152 of the long slot 15 is a plane; or the first slope 151 and the second slope 152 of the long slot 15 are curved surfaces, but the curvatures of the first slope 151 and the second slope 152 are different.

In some embodiments, the slot bottom edge 153 of the sectioned surface of the long slot 15 of the first separator 12 may be an arc-shaped bottom edge, a flat bottom edge, or an acute angle-shaped bottom edge. As shown in FIG. 4 and FIG. 5, in this embodiment, the slot bottom edge 153 of the long slot 15 is the arc-shaped bottom edge, or as shown in FIG. 6 and FIG. 7, in this embodiment, the slot bottom edge 153 of the long slot 15 is the acute angle-shaped bottom edge.

As shown in FIG. 3, in some embodiments, the second separator 13 has an opposite end 17 away from the far end 14 of the first separator 12, and a thickness of the opposite end 17 is less than a thickness of the far end 14, that is, the far end 14 of the first separator 12 has a relatively large thickness. In this way, after the long slot 15 is provided on the far end 14, the first elastic retaining slice 111 and the second elastic retaining slice 115 may still keep particular thicknesses and have better structural strengths.

Referring to FIG. 3 and FIG. 4 again, in this embodiment, the spacer 11 includes a central portion 16 adjacent to the central surface C, and the long slot 15 does not extend to the central portion 16. The first elastic retaining slice 111 has a first end 112 away from the central portion 16, the second elastic retaining slice 115 has a second end 116 away from the central portion 16, where a sum of a thickness T1 of the first end 112 and a thickness T2 of the second end 116 is greater than a thickness T3 of the central portion 16. Therefore, by using the foregoing structural design, even when the first elastic retaining slice 111 and the second elastic retaining slice 115 are stressed to be relatively close to each other to close the long slot 15, a distance between the far ends 14 of the two adjacent spacers 11 is still less than a diameter of the rolling element B, thereby effectively preventing the rolling elements B from departing from the chain belt retainer 1. In addition, the first elastic retaining slice 111 and the second elastic retaining slice 115 can also have better structural strengths to avoid frictions and collisions between the rolling elements B.

As shown in FIG. 4 again, in this example, the first elastic retaining slice 111 has a first root 113, the first root 113 is adjacent to the central portion 16 relative to the first end 112, and a thickness of the first end 112 is greater than a thickness of the first root 113. The second elastic retaining slice 115 also has a second root 117, the second root 117 is adjacent to the central portion 16 relative to the second end 116, and a thickness of the second end 116 is greater than a thickness of the second root 117. Therefore, the first elastic retaining slice 111 and the second elastic retaining slice 115 have better structural strengths to avoid frictions and collisions between the rolling elements B. As shown in FIG. 6, in the embodiment according to the invention, the thickness of the first end 112 of the first elastic retaining slice 111 may alternatively be less than the thickness of the first root 113, and the thickness of the second end 116 of the second elastic retaining slice 115 may alternatively be less than the thickness of the second root 117. Therefore, the first elastic retaining slice 111 and the second elastic retaining slice 115 have better elasticity to fit a surface of the rolling element B more closely, and the first elastic retaining slice 111 and the second elastic retaining slice 115 have better mobility, thereby helping generate elastic displacement under a force, to strengthen the retention for the rolling elements B.

Based on the above, in the embodiments and examples of the instant disclosure, long slots 15 are provided on far ends 14 of first separators 12 on the same side of spacers 11, so that when the chain belt retainer 1 is bent, for example, after the chain belt retainer 1 is accommodated in a circulation channel having a curved groove of a linear moving apparatus (for example, a linear sliding rail apparatus, a ball screw apparatus, or a ball spline apparatus), first elastic retaining slices 111 and second elastic retaining slices 115 of the spacers 11 located in the curved groove can be stressed to open toward the rolling elements B, thereby significantly increasing the retention to prevent the rolling elements B located at the curved groove from departing from the chain belt retainer 1. The following further describes in detail by using different embodiments.

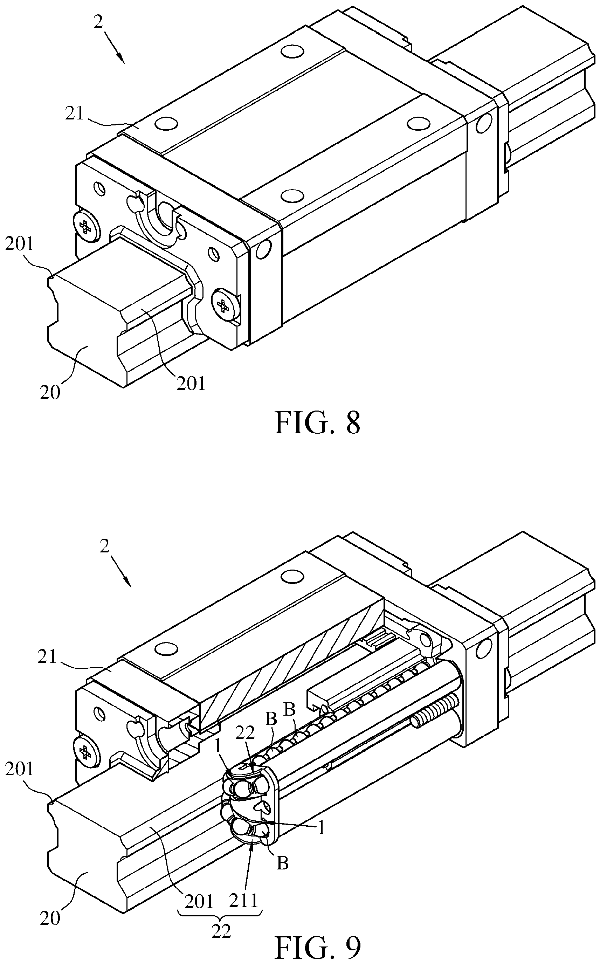

Referring to FIG. 8 and FIG. 9, FIG. 8 is a three-dimensional view of an embodiment of a linear moving apparatus according to the instant disclosure, and FIG. 9 is a partial cross-sectional view of a linear moving apparatus applied to a chain belt retainer. A linear moving apparatus 2 includes a guide member 20 and a moving member 21. The linear moving apparatus 2 provided in this embodiment is a linear sliding rail apparatus, where the guide member 20 is a sliding rail and has two linear rails 201, and the two linear rails 201 are respectively disposed on two opposite sides of the guide member 20. The moving member 21 is a sliding seat and is slidably disposed on the guide member 20, and at least one circulation channel 22 (here are a plurality of circulation channels 22, but this is not limited herein) is disposed between the guide member 20 and the moving member 21. A plurality of chain belt retainers 1 mounted with a plurality of rolling elements B are correspondingly accommodated in the circulation channels 22 to make the guide member 20 and the moving member 21 be in a rolling contact state through the rolling elements B. In this way, when the guide member 20 and the moving member 21 move relative to each other, the friction force is reduced and the driving torque is decreased. In addition, in this embodiment, the rolling elements B are balls, but may alternatively be rollers, and this is not limited herein.

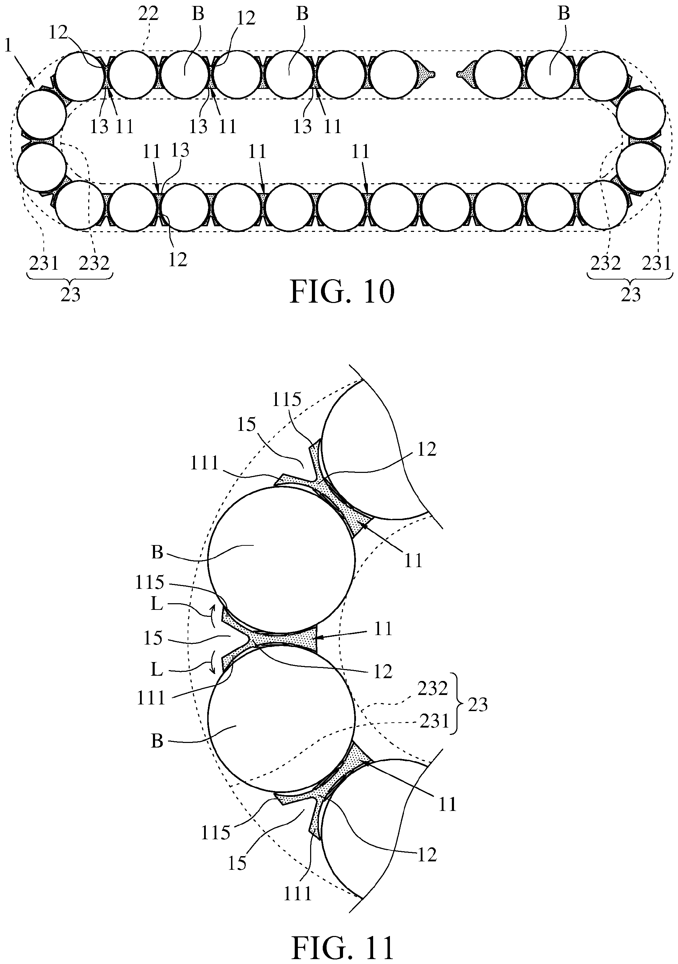

As shown in FIG. 9, in this embodiment, the moving member 21 has a plurality of annular channels 211, and the annular channels 211 correspond to the linear rails 201 of the guide member 20 to form the circulation channels 22. Referring to FIG. 10, the circulation channel 22 provided in this embodiment is represented by a dashed line, the circulation channel 22 forms a return channel of the chain belt retainer 1 for the chain belt retainer 1 and the plurality of rolling elements B accommodated in the chain belt retainer 1 to circulate back along the circulation channel 22.

As shown in FIG. 10 and FIG. 11, the chain belt retainer 1 herein is looped into an annular structure corresponding to a shape of the circulation channel 22, the first separator 12 of each spacer 11 is located in an outer ring of the annular structure, and the second separator 13 of each spacer 11 is located in the inner ring of the annular structure. In this embodiment, the circulation channel 22 includes two curved grooves 23, and each curved groove 23 has an external curved groove wall 231 and an internal curved groove wall 232. When the chain belt retainer 1 and the plurality of rolling elements B circulate back and move along the circulation channel 22, the long slots 15 of the first separators 12 of the spacers 11 that move to the curved groove 23 are adjacent to and face the external curved groove wall 231, and the far ends 14 of the spacers 11 located in the curved groove 23 are subjected to the stress generated by bending of the chain belt retainer 1. In this way, the first elastic retaining slice 111 and the second elastic retaining slice 115 of the spacer 11 are stressed to open toward the rolling elements B (as shown by arrow L in FIG. 11) to strengthen the retention and prevent the rolling elements B located at the curved groove 23 from departing from the chain belt retainer 1.

In some embodiments, the linear moving apparatus 2 may alternatively be a ball screw apparatus, and the guide member 20 and the moving member 21 are respectively a screw and a nut. Alternatively, the linear moving apparatus 2 may be a ball spline apparatus, and the guide member 20 and the moving member 21 are respectively a spline shaft and an outer sleeve. In addition, when the linear moving apparatus 2 is the ball screw apparatus or the ball spline apparatus, the rolling elements B are balls.

As shown in FIG. 2 and FIG. 4, in some embodiments, the first retaining surface 118 of the spacer 11 may be further provided with at least one first reinforcing convex portion 1181, the second retaining surface 119 may be further provided with at least one second reinforcing convex portion 1191, to strengthen the structural strength of each spacer 11 and reduce the deformation generated by each spacer 11 under a force, thereby improving the retention for the rolling elements B. In addition, the first reinforcing convex portion 1181 and the second reinforcing convex portion 1191 that are adjacent to each other of the two adjacent spacers 11 are both in contact with a rolling element B to support the rolling element B. In some embodiments, the first reinforcing convex portion 1181 and the second reinforcing convex portion 1191 may be an integrally formed structure with the spacer 11.

As shown in FIG. 2 and FIG. 4, in this embodiment, the first retaining surface 118 of the spacer 11 is provided with two annular first reinforcing convex portions 1181 of different sizes, and the two first reinforcing convex portions 1181 are concentric circles. The second retaining surface 119 of each spacer 11 is also provided with two annular second reinforcing convex portions 1191 of different sizes, and the two second reinforcing convex portions 1191 are concentric circles, but this is not limited herein. Actually, the first reinforcing convex portions 1181 and the second reinforcing convex portions 1191 may alternatively be annular structures of other shapes, for example, a triangle, a quadrangle, a pentagon, or a hexagon, or the first reinforcing convex portions 1181 and the second reinforcing convex portions 1191 may alternatively be non-annular structures such as a dot shape, a columnar shape, or a block shape.

As shown in FIG. 2, in this embodiment, an oil storage tank 1182 may be correspondingly formed between the first reinforcing convex portion 1181 and the first retaining surface 118, the oil storage tank 1182 is configured to store lubricating oil, so that when the chain belt retainer 1 moves, the lubricating oil can supply oil to the rolling elements B and have a lubricating function. The oil storage tank may also be formed between the second reinforcing convex portion 1191 and the second retaining surface 119, and details are not described herein.

## Claims

1. A chain belt retainer (1), configured to retain a plurality of rolling elements (B), the chain belt retainer (1) **characterized by** comprising:
two flexible chain belts (10), being parallel to each other and extending in the same extending direction, the two flexible chain belts (10) defining a central surface (C); and
a plurality of spacers (11), being arranged at equal intervals and along the extending direction, the spacers (11) being separately connected between the two flexible chain belts (10), the spacers (11) being divided into first separators (12) and second separators (13) by the central surface (C), the first separators (12) being located on the same side of the central surface (C), each first separator (12) comprising a far end (14) away from the central surface (C), the far end (14) being provided with a long slot (15), and the long slot (15) being perpendicular to the extending direction;
wherein a sectioned surface of the long slot (15) is V-shaped, the long slot (15) has a slot bottom edge (153) and a first slope (151) and a second slope (152) connected to two opposite sides of the slot bottom edge (153), **characterised in that**
the first slope (151) and the second slope (152) are convex curved surfaces;
wherein the long slot (15) divides the first separator (12) into a first elastic retaining slice (111) and a second elastic retaining slice (115), the first elastic retaining slice (111) has a first root (113), the first root (113) is adjacent to the central portion (16) relative to the first end (112), and a thickness of the first end (112) is less than a thickness of the first root (113), the second elastic retaining slice (115) has a second root (117), the second root (117) is adjacent to the central portion (16) relative to the second end (116), and a thickness of the second end (116) is less than a thickness of the second root (117).

2. The chain belt retainer (1) according to claim 1, wherein a depth of the long slot (15) is greater than 1/3 of a diameter of each rolling element (B).

3. The chain belt retainer (1) according to claim 1, wherein the slot bottom edge (153) is an arc-shaped bottom edge.

4. The chain belt retainer (1) according to claim 1, wherein the second separator (13) comprises an opposite end (17) away from the far end (14), and a thickness of the opposite end (17) is less than a thickness of the far end (14).

5. A linear moving apparatus (2), comprising:
a guide member (20);
a moving member, disposed on the guide member (20), a circulation channel being disposed between the guide member (20) and the moving member (21), the circulation channel (22) comprising a curved groove (23), and the curved groove (23) having an external curved groove wall (231) and an internal curved groove wall (232);
the chain belt retainer (1) according to any one of claims 1 to 4, the chain belt retainer (1) being accommodated in the circulation channel (22), and a long slot (15) of a first separator (12) of each spacer (11) located in the curved groove (23) being adjacent to and facing the external curved groove wall (231); and
a plurality of rolling elements (B), accommodated between spacers (11) of the chain belt retainer (1).

6. The linear moving apparatus (2) according to claim 5, wherein the linear moving apparatus (2) is a linear sliding rail apparatus, and each rolling element (B) is a ball or a roller.

7. The linear moving apparatus (2) according to claim 5, wherein the linear moving apparatus (2) is a ball screw apparatus or a ball spline apparatus, and each rolling element (B) is a ball.

## Patentansprüche

1. Kettenriemenrückhaltevorrichtung (1), welche konfiguriert ist, um eine Vielzahl von Wälzkörpern (B) zurückzuhalten, wobei die Kettenriemenrückhaltevorrichtung (1) **dadurch gekennzeichnet ist, dass** sie aufweist:
zwei flexible Kettenriemen (10), welche parallel zueinander sind und sich in der gleichen Erstreckungsrichtung erstrecken, wobei die beiden flexiblen Kettenriemen (10) eine mittige Fläche (C) definieren, und
eine Vielzahl von Abstandshaltevorrichtungen (11), welche in gleichen Abständen und entlang der Erstreckungsrichtung angeordnet sind, wobei die Abstandshaltevorrichtungen (11) separat zwischen den zwei flexiblen Kettenriemen (10) verbunden sind, die Abstandshaltevorrichtungen (11) mittels der mittigen Fläche (C) in erste Trennvorrichtungen (12) und zweite Trennvorrichtungen (13) geteilt sind, wobei die ersten Trennvorrichtungen (12) an derselben Seite der mittigen Fläche (C) angeordnet sind, wobei jede erste Trennvorrichtung (12) ein fernes Ende (14) aufweist, welches sich entfernt von der mittigen Fläche (C) befindet, wobei das ferne Ende (14) mit einem langen Schlitz (15) versehen ist, und der lange Schlitz (15) senkrecht zu der Erstreckungsrichtung ist,
wobei eine Schnittfläche des langen Schlitzes (15) V-förmig ist, der lange Schlitz (15) einen Schlitzbodenrand (153) und eine erste Schräge (151) und eine zweite Schräge (152) hat, welche mit zwei entgegengesetzten Seiten des Schlitzbodenrands (153) verbunden sind, **dadurch gekennzeichnet, dass**:
die erste Schräge (151) und die zweite Schräge (152) konvexe gekrümmte Flächen sind,
wobei der lange Schlitz (15) die erste Trennvorrichtung (12) in eine erste elastische Rückhaltescheibe (111) und eine zweite elastische Rückhaltescheibe (115) teilt, wobei die erste elastische Rückhaltescheibe (111) einen ersten Wurzelbereich (113) aufweist, wobei der erste Wurzelbereich (113) verglichen mit dem ersten Ende (112) zu dem mittigen Abschnitt (16) benachbart ist, und eine Dicke des ersten Endes (112) geringer ist als eine Dicke des ersten Wurzelbereichs (113), wobei die zweite elastische Rückhaltescheibe (115) einen zweiten Wurzelbereich (117) aufweist, wobei der zweite Wurzelbereich (117) verglichen mit dem zweiten Ende (116) zu dem mittleren Abschnitt (16) benachbart ist und eine Dicke des zweiten Endes (116) geringer ist als eine Dicke des zweiten Wurzelbereichs (117).

2. Kettenriemenrückhaltevorrichtung (1) gemäß Anspruch 1, wobei eine Tiefe des langen Schlitzes (15) größer ist als 1/3 eines Durchmessers von jedem Wälzkörper (B).

3. Kettenriemenrückhaltevorrichtung (1) gemäß Anspruch 1, wobei der Schlitzbodenrand (153) ein bogenförmiger Bodenrand ist.

4. Kettenriemenrückhaltevorrichtung (1) gemäß Anspruch 1, wobei die zweite Trennvorrichtung (13) ein entgegengesetztes Ende (17) aufweist, welches sich entfernt von dem fernen Ende (14) befindet, und wobei eine Dicke des entgegengesetzten Endes (17) geringer ist als eine Dicke des fernen Endes (14).

5. Linearbewegungsvorrichtung (2), aufweisend:
ein Führungselement (20),
ein Bewegungselement, welches an dem Führungselement (20) angeordnet ist, wobei ein Umlaufkanal zwischen dem Führungselement (20) und dem Bewegungselement (21) angeordnet ist, wobei der Umlaufkanal (22) eine gekrümmte Nut (23) aufweist, und wobei die gekrümmte Nut (23) eine äußere gekrümmte Nutwand (231) und eine innere gekrümmte Nutwand (232) aufweist,
die Kettenriemenrückhaltevorrichtung (1) gemäß einem der Ansprüche 1 bis 4, wobei die Kettenriemenrückhaltevorrichtung (1) in dem Umlaufkanal (22) aufgenommen ist, und wobei ein langer Schlitz (15) einer ersten Trennvorrichtung (12) von jeder Abstandshaltevorrichtung (11), welche sich in der gekrümmten Nut (23) befindet, zu der äußeren gekrümmten Nutwand (231) benachbart und dieser zugewandt ist, und
eine Vielzahl von Wälzkörpern (B), welche zwischen den Abstandshaltevorrichtungen (11) der Kettenriemenrückhaltevorrichtung (1) aufgenommen sind.

6. Linearbewegungsvorrichtung (2) gemäß Anspruch 5, wobei die Linearbewegungsvorrichtung (2) eine Linearlaufschienenvorrichtung ist und jedes Wälzelement (B) eine Kugel oder eine Rolle ist.

7. Linearbewegungsvorrichtung (2) gemäß Anspruch 5, wobei die Linearbewegungsvorrichtung (2) eine Kugelumlaufspindelvorrichtung oder eine Kugelkeilnutvorrichtung ist, und wobei jedes Wälzelement (B) eine Kugel ist.

## Revendications

1. Dispositif de retenue de courroie à chaîne (1), configuré pour retenir une pluralité d'éléments de roulement (B), le dispositif de retenue de courroie à chaîne (1) étant **caractérisé en ce qu'**il comprend :
deux courroies à chaîne flexibles (10), parallèles l'une à l'autre et s'étendant dans la même direction d'extension, les deux courroies à chaîne flexibles (10) définissant une surface centrale (C) ; et
une pluralité d'entretoises (11), agencées à intervalles égaux et le long de la direction d'extension, les entretoises (11) étant reliées séparément entre les deux courroies à chaîne flexibles (10), les entretoises (11) étant divisées en premiers séparateurs (12) et en deuxièmes séparateurs (13) par la surface centrale (C), les premiers séparateurs (12) étant situés sur le même côté de la surface centrale (C), chaque premier séparateur (12) comprenant une extrémité éloignée (14) loin de la surface centrale (C), l'extrémité éloignée (14) étant pourvue d'une fente longue (15), et la fente longue (15) étant perpendiculaire à la direction d'extension,
dans lequel une surface sectionnée de la fente longue (15) est en forme de V, la fente longue (15) a un bord inférieur de fente (153) et une première pente (151) et une deuxième pente (152) reliées à deux côtés opposés du bord inférieur de fente (153), **caractérisé en ce que** la première pente (151) et la deuxième pente (152) sont des surfaces incurvées convexes ; F
dans lequel la fente longue (15) divise le premier séparateur (12) en une première tranche de retenue élastique (111) et une deuxième tranche de retenue élastique (115), la première tranche de retenue élastique (111) a une première racine (113), la première racine (113) est adjacente à la partie centrale (16) par rapport à la première extrémité (112), et une épaisseur de la première extrémité (112) est inférieure à une épaisseur de la première racine (113), la deuxième tranche de retenue élastique (115) a une deuxième racine (117), la deuxième racine (117) est adjacente à la partie centrale (16) par rapport à la deuxième extrémité (116), et une épaisseur de la deuxième extrémité (116) est inférieure à une épaisseur de la deuxième racine (117).

2. Dispositif de retenue de courroie à chaîne (1) selon la revendication 1, dans lequel une profondeur de la fente longue (15) est supérieure à 1/3 d'un diamètre de chaque élément de roulement (B).

3. Dispositif de retenue de courroie à chaîne (1) selon la revendication 1, dans lequel le bord inférieur de fente (153) est un bord inférieur en forme d'arc.

4. Dispositif de retenue de courroie à chaîne (1) selon la revendication 1, dans lequel le deuxième séparateur (13) comprend une extrémité opposée (17) loin de l'extrémité éloignée (14), et une épaisseur de l'extrémité opposée (17) est inférieure à une épaisseur de l'extrémité éloignée (14).

5. Appareil de déplacement linéaire (2), comprenant :
un élément de guidage (20) ;
un élément mobile, disposé sur l'élément de guidage (20), un canal de circulation étant disposé entre l'élément de guidage (20) et l'élément mobile (21), le canal de circulation (22) comprenant une rainure courbe (23), et la rainure courbe (23) ayant une paroi de rainure courbe externe (231) et une paroi de rainure courbe interne (232) ;
le dispositif de retenue de courroie à chaîne (1) selon l'une quelconque des revendications 1 à 4, le dispositif de retenue de courroie à chaîne (1) étant logé dans le canal de circulation (22), et une fente longue (15) d'un premier séparateur (12) de chaque entretoise (11) située dans la rainure courbe (23) étant adjacente et faisant face à la paroi de rainure courbe externe (231) ; et
une pluralité d'éléments de roulement (B), logés entre les entretoises (11) du dispositif de retenue de courroie à chaîne (1).

6. Appareil de déplacement linéaire (2) selon la revendication 5, dans lequel l'appareil de déplacement linéaire (2) est un appareil à rail coulissant linéaire, et chaque élément de roulement (B) est une bille ou un rouleau.

7. Appareil de déplacement linéaire (2) selon la revendication 5, dans lequel l'appareil de déplacement linéaire (2) est un appareil à vis à billes ou un appareil à cannelure à billes, et chaque élément de roulement (B) est une bille.
